# EUROPÄISCHE PATENTSCHRIFT

(11) **EP 2 154 177 B1**
(45) Veröffentlichungstag und Bekanntmachung des Hinweises auf die Patenterteilung: **24.09.2014**
(21) Anmeldenummer: 09008651.3
(22) Anmeldetag: 02.07.2009
(51) Int. Cl.: C08J 3/205, C08K 3/22, C08J 5/00, C08K 9/04, B29C 47/10, B29C 47/76

(54) **Herstellungsverfahren von thermoplastischen Polymeren enthaltend grobskalige und/oder nanoskalige, gecoatete, dessagglomerierte Magnesiumhydroxidpartikel und eine Vorrichtung hierzu**
Manufacturing procedure for large-scale and/or nano-scale, coated, disagglomerated magnesium hydroxide particles containing thermoplastic polymers and device for this purpose
Procédé de fabrication de polymères thermoplastiques contenant des particules d'hydroxyde de magnésium à grosse échelle et/ou nano-échelle, revêtues, désagglomérées et un dispositif correspondant

(30) Priorität: 12.08.2008 DE 102008038667
(43) Veröffentlichungstag der Anmeldung: 17.02.2010
(73) Patentinhaber: K+S Aktiengesellschaft, 34131 Kassel (DE)
(72) Erfinder: Glende, Christopher David, 37120 Bovenden (DE); Ahlert, Sascha, Dr., 36039 Fulda (DE); Sachse, Jörg-Heino, Dr., 34119 Kassel (DE); Stahl, Ingo, Prof. Dr., 34246 Vellmar (DE); Vogel, Willi, 34134 Kassel (DE); Hohmann, Jens, 34281 Gudensberg (DE); Schmidt, Rainer, 34119 Kassel (DE); Bledzki, Andrzej Prof. Dr., 34229 Ahnatal (DE)
(74) Vertreter: Kröncke, Rolf

(56) Entgegenhaltungen:
- EP-A1- 1 593 652
- WO-A1-00/05293
- WO-A1-98/46673
- FR-A- 1 384 652
- US-A- 4 169 826
- US-A- 5 872 169
- US-A1- 2006 264 553

## Beschreibung

Die vorliegende Anmeldung betrifft Verfahren zur Herstellung von gefüllten Thermoplasten enthaltend grob- und/oder nanoskalige, gecoatete Magnesiumhydroxidpartikel, wobei diese in Form einer Suspension oder Dispersion in einem wässrigen oder organischen Lösungsmittel dem Thermoplasten zugeführt werden. Des Weiteren richtet sich die vorliegende Anmeldung auf eine Vorrichtung zum Herstellen von Thermoplasten enthaltend grob- und/oder nanoskalige, gecoatete Magnesiumhydroxidpartikel als Füllstoffe, wobei die Magnesiumhydroxid-partikel in Form einer Suspension oder Dispersion dem Thermoplasten hinzugefügt werden. Schließlich richtet sich die vorliegende Anmeldung auf die Thermoplaste selbst.

### Stand der Technik

Es ist allgemein bekannt, dass Füllstoffe in Kunststoffen sowohl zur Modifizierung der Eigenschaften als auch zur Kostenreduktion eingebracht werden. Diese Füllstoffe können sowohl hinsichtlich ihrer Teilchengröße grobskalig als auch nanoskalig sein und werden üblicherweise als getrocknete Pulver in das Polymer eingebracht.

Thermoplastische Kunststoffe, die anorganische Materialien als Füllstoffe enthalten, sind allgemein bekannt und lassen sich in unzähligen Beispielen des Alltags wiederfinden. Diese Füllstoffe werden meist in hohen prozentualen Anteil dem polymeren Grundstoff beigemischt mit dem Ziel, diesem bestimmte Eigenschaften zu verleihen. So kann beispielsweise bei Einsatz von Bariumsulfat als Füllstoff bedingt durch dessen hohe intrinsische Dichte, das Gewicht des Polymers stark erhöht werden, wodurch z.B. eine verbesserte schallabsorbierende Funktion erreicht wird. Auch lässt sich mit diesem Mineral eine Röntgenstrahlenabsorbierende Funktion erreichen, dieses ist z.B. auf dem Gebiet der Medizintechnik von großem Interesse. Durch den Einsatz von Füllstoffen in Kunststoffen lassen sich des weiteren die Produktkosten verringern, da die anorganischen Füllstoffe meist einen geringeren Preis aufweisen als die eingesetzten Polymere. Einen großen Einfluss haben anorganische Füllstoffe, z.B. die üblicherweise eingesetzten Füllstoffe wie gemahlenes oder gefälltes Kalziumcarbonat, Talkum oder Schichtsilikate, auf die mechanischen Eigenschaften des polymeren Werkstoffs. Die meist in hohen prozentualen Anteilen verwendeten Füllstoffe haben häufig eine signifikante Erhöhung des Elastizitäts-Moduls (E-Modul) zur Folge. Diese ist aber meist verbunden mit geringeren Reißdehnungs- und Impact-Werten. Dieses Verspröden des Materials ist häufig problematisch, kann aber nicht vermieden werden.

Magnesiumhydroxid wird als funktioneller Füllstoff z.B. im Bereich des Flammschutzes eingesetzt. Es verleiht dem Polymer eine flammhemmende Eigenschaft. Dies ist dadurch begründet, dass Magnesiumhydroxid oberhalb von 300°C sein Kristallwasser abgibt, das im Brandfall das Polymer kühlt und des weiteren eine stabile und schützende Oxidschicht ausbildet. Um diese flammhemmenden Eigenschaften erreichen zu können, sind Füllstoffgehalte von mindestens 50 Gew.-% in den Polymeren notwendig. Mit diesem Füllstoffgehalt lässt sich nach dem vom Underwriter Laboratory in den USA entwickelten Brandschutztest UL94 die Brandklasse V0 erreichen, allerdings leiden die mechanischen Eigenschaften des Kunststoffs deutlich unter dem hohen anorganischen Füllgrad. Hierbei tritt häufig ein Verspröden des Kunststoffes ein, verbunden mit einem geringen Impact-Vermögen und geringen Reißdehnungswerten.

Bei dem Füllen von Thermoplasten gilt als Verfahren der Wahl das Einbringen des Füllstoffes in Form von feingemahlenem Pulver mittels Extruder. Allerdings tritt bei thermoplastischen Werkstoffen und dem Einsatz von vorgeblich nanoskaligen Materials nur zum Teil eine Desagglomerierung des Nanopartikel-Füllstoffes durch die Scherkräfte der Extruderwalze(n) auf. D.h. die zwar als Nanopartikel bezeichneten Füllstoffe liegen tatsächlich in dem Pulver als grobskalige Agglomerate der Nanopartikel vor. Diese agglomerierten Nanopartikel im Mikrometerbereich werden durch die im Extruder auftretenden Scherkräfte nicht vollständig voneinander getrennt, dadurch weisen die polymeren Werkstoffe bei Einsatz dieser nanoskaligen Materialien ein mechanisches Eigenschaftsprofil von Thermoplasten enthaltend grobskalige Füllstoffe auf.

Aus der PCT/US02/17250 ist ein Verfahren zur Herstellung von Silika-basierten Nanokompositen mittels Extrusion in Polymethylmethacrylat bekannt. Der Füllstoff wird in diesem Patent mit Silanen zwar funktionalisiert, doch werden als Ausgangssubstanzen agglomerierte "fumed-Silica-Arten" (Aerosil® von Degussa) verwendet, die als agglomerierte Pulver vorliegen. Diese aus nanoskaligen Primärpartikeln bestehenden Agglomerate werden mit Silanen gecoatet, nicht aber die einzelnen nanoskaligen Primärpartikel. Diese liegen nicht einzeln gecoatet vor.

Aus der WO 2002/081574 ist das Coaten von Magnesiumhydroxid-Pulver in einem Henschel-Mischer mit Aminosilanen, Titanaten, Zirkonaten und Fettsäuren und der anschließenden Einbringung in Polyamide bekannt. Hier werden allerdings lediglich Agglomerate gecoatet, nicht Primärkristalle, und die anschließende Einbringung in die Polymere erfolgt nicht in desagglomerierter Form.

Tatsächlich werden bisher nur agglomerierte Magnesiumhydroxide, die entweder aus grob- oder nanoskaligen Primärpartikeln bestehen, in Thermoplaste eingearbeitet. Auch wenn dabei nanoskalige Primärpartikel verwendet werden, liegen diese im Thermoplast noch als Agglomerate im Mikrometerbereich vor, bedingt durch den Trocknungsprozess zum Erhalt der verwendeten trockenen Pulver, so dass die mechanischen Eigenschaften des gefüllten Polymers denen eines mit grobskaligen Magnesiumhydroxid gefüllten Kunststoffen ähnelt. Der Trocknungsschritt bewirkt ein Agglomerieren der nanoskaligen Partikel, die auch durch die im Vermischungsprozess auftretenden mechanischen Kräfte, z.B. in einem Ultraturrax oder einem Dissolver, nicht vollständig desagglomeriert werden können, da diese mechanischen Kräfte nicht ausreichend sind.

Der vorliegenden Erfindung liegt die Aufgabe zugrunde, Verfahren bereitzustellen, die eine Verbesserung der mechanischen Eigenschaften von Polymeren nach Einarbeitung von Füllstoffen ermöglichen. Eine weitere Aufgabe der vorliegenden Erfindung ist die Bereitstellung von Verfahren zur Herstellung von mit Füllstoffen, insbesondere Magnesiumhydroxidpartikeln, gefüllten Thermoplasten.

Schließlich ist eine weitere Aufgabe der vorliegenden Erfindung die Bereitstellung von Vorrichtungen geeignet zur Durchführung dieser Verfahren zum Einbringen von Füllstoffen, insbesondere Magnesiumhydroxidpartikel, in Thermoplaste.

### Kurze Beschreibung der Abbildungen

Figur 1 zeigt beispielhaft eine erfindungsgemäße Vorrichtung zur Durchführung des erfindungsgemäßen Verfahrens.
Figur 2 zeigt eine Ausführungsform der Zufuhrvorrichtung für eine Dispersion oder Suspension enthaltend grob- oder nanoskalige, gecoatete, desagglomerierte Magnesiumhydroxidpartikel.
Figur 3 zeigt rasterelektronenmikroskopische Aufnahmen eines erfindungsgemäßen Thermoplasts mit 40 Gew.-% nanoskaligem, gecoatetem Magnesiumhydroxid. Links ist eine 6700-fache Vergrößerung gezeigt, rechts ein Ausschnitt aus dem linken Bild mit einer 26800-fachen Vergrößerung.
Figur 4 zeigt die Werte für das E-Modul ermittelt mittels Reiß-Dehnungsmessung.

### Ausführliche Beschreibung der Erfindung

In einem ersten Aspekt richtet sich die vorliegende Erfindung auf ein Verfahren zur Herstellung von Thermoplasten enthaltend grob- und/oder nanoskalige, gecoatete und desagglomerierte Magnesiumhydroxidpartikel im wesentlichen in Form ihrer gecoateten Primärpartikel umfassend die Schritte
a) Bereitstellen eines Thermoplasten;
b) Bereitstellen von grob- und/oder nanoskaligen, gecoateten Magnesiumhydroxidpartikeln als Suspension oder Dispersion in einem wässrigen oder organischen Lösungsmittel;
c) Zuführen der grob- und/oder nanoskaligen, gecoateten Magnesiumhydroxidpartikel in Suspension oder Dispersion zu dem Thermoplasten;
d) Vermischen der Magnesiumhydroxidpartikel mit dem erwärmten, aufgeschmolzenen Thermoplasten;
e) gegebenenfalls Entfernen des Lösungsmittels der Suspension oder Dispersion aus dem Gemisch von Schritt d).

Die mit dem erfindungsgemäßen Verfahren mit Magnesiumhydroxidpartikeln gefüllten Thermoplaste zeichnen sich dadurch aus, dass sie verbesserte mechanische Eigenschaften, insbesondere ein verbessertes Elastizitätsmodul aufzeigen.

In einer Ausführungsform umfasst das erfindungsgemäße Verfahren weiterhin den Schritt des Extrudierens des Theromplasten enthaltend nanoskalige, gecoatete, desaggtomerierte Magnesiumhydroxidpartikel.

Insbesondere die mit nanoskaligen, gecoateten Magnesiumhydroxidpartikel im wesentlichen in Form der gecoateten Primärpartikel gefüllten Thermoplaste zeigen überlegene mechanische Eigenschaften auf sowohl in Bezug auf das Elastizitätsmodul als auch in Bezug auf eine geringe Versprödung.

Der Ausdruck "gefüllte Thermoplaste" wie er hierin verwendet wird, bezieht sich auf einen Thermoplasten enthaltend Magnesiumhydroxidpartikel.

Der Ausdruck "nanoskalig", wie er vorliegend verwendet wird, bezieht sich auf Partikel mit einem mittleren Durchmesser (d50) von <=100 nm. Bevorzugt weisen mindestens 70 %, wie 80 %, z.B. 90 %, insbesondere 95 %, wie 98 % oder 99 % der Partikel einen Durchmesser von <=100 nm auf.

Der Ausdruck "grobskalig", wie er vorliegend verwendet wird, bezieht sich auf Partikel mit einem mittleren Durchmesser (d50) von >100 nm. Bevorzugt weisen mindestens 70%, wie 80%, z. B. 90%, insbesondere 95%, wie 98% oder 99% der Partikel einen Durchmesser von >100 nm auf.

Der Ausdruck "desagglomeriert", wie er hier verwendet wird, bedeutet, dass die Sekundärpartikel nicht vollständig als Primärpartikel vorliegen, sondern, dass diese Sekundärpartikel deutlich weniger agglomeriert oder aggregiert vorliegen als nach einem Trocknungsschritt von nicht gecoateten Primär- oder Sekundärpartikeln. Dadurch, dass jedes Primärpartikel beschichtet vorliegt, ist ein eventuell notwendiges Desagglomerieren leichter durchführbar. Vorliegend werden aufgrund der mechanischen Kräfte, wie Scherkräfte, bei dem Vermischen des Thermoplasten mit den Magnesiumhydroxidpartikeln diese locker agglomerierten (desagglomerierten) Partikel in die Primärpartikel zerlegt, so dass das Magnesiumhydroxid weitestgehend in seiner Primärpartikelform und homogen verteilt in dem Thermoplasten vorliegt.

Da bereits die desagglomerierten und gecoateten Magnesiumhydroxidpartikel als Suspension oder Dispersion in den Thermoplasten eingebracht werden, ist das Desagglomerieren und Vereinzeln der Primärpartikel in dem Thermoplast - im Gegensatz zu dem im Stand der Technik verwendeten getrockneten Pulvers - nicht mehr erforderlich. Dadurch werden Thermoplaste mit homogen verteilten Füllstoffen erhalten und die Nachteile der Verwendung von agglomerierten Füllstoffen, wie Versprödung des Materials, ist verbessert und das E-Modul ist erhöht. Erfindungsgemäß wird also eine Suspension oder Dispersion der grob- und/oder nanoskaligen, gecoateten, ggf. desagglomerierten Magnesiumhydroxidpartikel mit dem Thermoplasten in Kontakt gebracht, um mit diesem dann vermischt zu werden. Dabei kann der Thermoplast bereits in aufgeschmolzener Form vorliegen.

Die in der Suspension oder Dispersion vorliegenden Magnesiumhydroxidpartikel zeichnen sich dadurch aus, dass sie als grob- und/oder nanoskalige Magnesiumhydroxidpartikel eine vollständige Beschichtung der einzelnen Primärpartikel besitzen. Diese vollständige Beschichtung der Primärpartikel wird dadurch erreicht, dass mit einem "in-situ-Verfahren" bereits bei der Fällungsreaktion dem Reaktionsgemisch aus Alkalihydroxid und Magnesiumsalzlösung geeignete Zusatzstoffe, sog. Additive, zugefügt werden, die ein Beschichten (Coaten) der Primärpartikel ermöglicht (wie z.B. in der noch nicht veröffentlichten DE-Anmeldung Nr. 10 2008 031 361.0 beschrieben).

D.h. die als Magnesiumhydroxidpartikel verwendeten Materialien werden erhalten, indem eine Magnesiumsalzlösung mit einer Alkalihydroxidlösung unter Bildung eines Reaktionsgemisches zur Fällung von gecoateten Magnesiumhydroxid-Primärpartikeln in Kontakt gebracht wird, wobei in mindestens einer der Magnesiumsalzlösung oder Alkalilhydroxidlösung mindestens eines der Additive A, B und/oder C enthalten ist oder bei in Kontakt bringen einer der beiden Lösungen mindestens eines der vorliegenden Additive A, B und/oder C gleichzeitig mit dem sich aus den beiden Lösungen ergebenen Reaktionsgemische in Kontakt gebracht wird, wobei die Additive ein Wachstumsinhibitor A, ein Dispergiermittel B und/oder eine wässrige Fettsäurelösung C oder Mischungen hiervon sind.

Dadurch ist die Herstellung von pregecoateten Magnesiumhydroxidpartikeln möglich, wobei sich die Magnesiumhydroxidpartikel dadurch auszeichnen, dass jedes einzelne der Magnesiumhydroxid-Primärpartikel vollständig gecoatet ist, da sich bereits während des Fällungsprozesses aufgrund des Vorhandenseins der genannten Additive ein Coating auf der Oberfläche ausbildet. Diese grob- und/oder nanoskaligen, gecoateten, desagglomerierten Magnesiumhydroxidpartikel liegen in Form einer Suspension oder Dispersion vor und werden in dieser Form direkt mit dem Thermoplasten in Verbindung gebracht (wie z.B. in der noch nicht veröffentlichten DE-Anmeldung Nr. 10 2008 031 361.0 beschrieben).

Gegebenenfalls kann sich als Desagglomerierungsprozess eine Behandlung mittels Perlmühle oder Ultraschall anschließen. Bei diesen Verfahren werden die Partikel durch Zugabe von geeigneten Additiven bzw. Additivgemischen mit einer weiteren Oberflächenbeschichtung versehen. Diese Desagglomerierungsprozesse erfolgen dabei in Abhängigkeit von dem Lösungsmittel mit verschiedenen Dispergiermitteln. Bei Verwendung eines organischen Lösungsmittels wird ein Dispergiermittel D eingesetzt, während bei Verwendung einet wässrigen Lösungsmittels ein Dispergiermittel B verwendet wird, das identisch mit dem Dispergiermittel B während der Fällungsreaktion sein kann.

In einer Ausführungsform des Verfahrens werden die nanoskaligen, gecoateten, desagglomerierten Magnesiumpartikel erhalten durch Perlmahlung der Suspension oder Dispersion von ungecoateten oder pregecoateten Magnesiumhydroxidpartikeln in einem wässrigen Lösungsmittel in Anwesenheit von einem Dispergiermittel B oder in einem organischen Lösungsmittel in Anwesenheit von einem Dispergiermittel D.

Die bei dem Desagglomerierungsprozess mittels Perlmühle oder Ultraschall entstehenden grobskaligen oder nanoskaligen Partikel bestehend aus Magnesiumhydroxid werden durch die Zugabe von Dispergiermittel B (wässrige Lösungsmittel) oder Dispergiermittel D (organische Lösungsmittel) elektrostatisch und/oder sterisch stabilisiert und sind so vor Reagglomeration geschützt. Die Polarität der Partikel wird ebenfalls durch geeignete Dispergiermittel B bzw. Dispergiermittel D, den Coatings, auf die spätere polymere Zielmatrix angepasst und somit ein späteres Einarbeiten in den Thermoplasten erleichtert. Das Coating wirkt auch als Abstandshalter (Spacer), da die Kristallflächen der grob- und/oder nanoskaligen Partikel sich nicht berühren können und so ein Zusammenwachsen der nanoskaligen Partikel zu größeren Aggregaten verhindert wird. Somit wird die Bildung fester Aggregate verhindert. Auch können die bei den Desagglomerierungsschritten zugegebenen Dispergiermittel B oder Dispergiermittel D bereits funktionelle Gruppen tragen, die die grob- und/oder nanoskaligen Partikel später kovalent an die Polymermatrix anbinden können, um eine signifikante Verbesserung der mechanischen Eigenschaften der polymeren Werkstoffe zu ermöglichen.

Aufgrund der Verwendung von gecoateten Magnesiumhydroxidpartikeln ist es möglich, die Partikel in dem Thermoplasten einzubringen und bei Vermischen die Partikel zu vereinzeln, um eine homogene Verteilung der gecoateten Primärpartikel in Thermoplasten zu erreichen. Dabei werden die Magnesiumhydroxidpartikel als grob- und/oder nanoskalige Suspension oder Dispersion dem Thermoplasten zugeführt. Dieses findet bevorzugt in einem Extruder statt, wo eine Vermischung der Magnesiumhydroxidpartikel mit dem gegebenenfalls bereits geschmolzenen Polymer stattfinden kann.

In einer bevorzugten Ausführungsform der vorliegenden Erfindung beinhaltet die Suspension oder Dispersion der Magnesiumhydroxidpartikel zusätzlich noch Thermoplast in fester Form, bevorzugt als Granulat, bevor diese dem Extruder zugeführt wird. Die Zufuhr einer Dispersion oder Suspension zu der Mischungseinrichtung, wie dem Extruder, in der die Magnesiumhydroxidpartikel mit dem Thermoplasten z.B. in Form des Granulats vorab vermischt wurden, ist insbesondere bevorzugt, wenn der gefüllte Thermoplast einen Füllgrad von mindestens 40 Gew.-%, wie mindestens 50 Gew.-% und insbesondere mindestens 60 Gew.-% aufweisen soll.

Bevorzugt wurden die verwendeten, grob- und/oder nanoskaligen, gecoateten Magnesiumhydroxidpartikel keinem Trocknungsschritt unterworfen, um eine Agglomeratbildung zu minimieren bzw. zu verhindern.

Im Gegensatz zu dem herkömmlicherweise verwendeten Material an Magnesiumhydroxidpartikeln die in Thermoplasten eingebracht werden, bei denen es sich tatsächlich um mechanische Zerkleinerungsprodukte handelt und bei denen die Aggregate aufgebrochen werden müssen, sind bei den vorliegend verwendeten Magnesiumhydroxidpartikeln bereits jeder einzelne Primärpartikel beschichtet, so dass ein Desagglomerieren der Agglomerate in Primärpartikel vorteilhaft möglich ist.

Dies ist sowohl energetisch als auch zeitlich deutlich weniger aufwendig als das mechanische Zerkleinern, wie es bei den Aggregaten des Standes der Technik notwendig ist. Auch lassen sich bei dem pregecoatetem Material deutlich geringere Teilchengrößenverteilungen mittels Perlmahlung oder Ultraschall erreichen. Herkömmliches Material mittels Ultraschall zu zerkleinern, bedarf größerer Energiemengen und wäre daher aus wirtschaftlicher Sicht unvorteilhaft. Bei dem Vermischen der Magnesiumhydroxidpartikel in Suspension oder Dispersion mit dem aufgeschmolzenen Thermoplasten sind die einwirkenden mechanischen Kräfte bei dem Vermischen, z.B. in einen Extruder oder Kneter, ausreichend, um die eventuell gebildeten lockeren Agglomerate aufzulösen und somit Thermoplaste zu erhalten, in denen im wesentlichen Primärpartikel des Magnesiumhydroxids vorliegen.

Ein wesentlicher Aspekt des erfindungsgemäßen Verfahrens nach Schritt b) und c) ist dabei, dass die grob- und/oder nanoskaligen, gecoateten, desagglomerierten Magnesiumhydroxidpartikel nicht als getrocknetes Pulver, bei dem die Partikel agglomeriert vorliegen, sondern als bevorzugt desagglomerierte, gecoatete und gegebenenfalls funktionalisierte Partikel, bevorzugt vereinzelte Primärpartikel, als Suspension oder Dispersion verwendet werden.

Das als Ausgangsmaterial verwendete Magnesiumhydroxid weist eine geringe Dichte auf. Somit können leichte Kompositmaterialien als fertige Bauteile erstellt werden. Solche Leichtbauwerkstoffe auf Polymerbasis findet in verschiedenen Bereichen, wie z.B. im Flugzeug-, Fahrzeug- oder Schienenbau Anwendung. Des Weiteren sind die Ausgangsmaterialien zur Herstellung der Magnesiumhydroxidnanopartikel kostengünstig und erlauben somit die Herstellung von kostengünstigen Endprodukten. Magnesiumhydroxid hat den weiteren Vorteil, dass Nanopartikel aus Magnesiumhydroxid aufgrund des eingeschlossenen Kristallwassers im Falle eines Brandes durch ihre große Oberfläche ihr Kristallwasser besonders schnell abgeben können, somit eine Kühlung des Polymers zügig eintritt und sich anschließend eine schützende Oxidschicht ausbilden kann.. Dadurch eignen sich die erfindungsgemäßen gefüllten Thermoplasten insbesondere auch als Brandschutzmittel. Als weiterer Vorteil des erfindungsgemäßen Verfahrens ist zu nennen, dass durch Verwendung von sterisch stabilisierenden Additiven, insbesondere funktionalisierten Additiven, diese die Kopplung der Magnesiumhydroxidpartikel mit den Thermoplasten vereinfachen. Somit wird eine vollständige Anbindung der Nanopartikel mit der Polymermatrix erst ermöglicht. Gerade bei Nanopartikeln, bei denen bei desagglomerierter Einbringung ein Verspröden des Polymers nicht zu befürchten ist, sondern eher zähmodifizierende Eigenschaften erwartet werden können, wird eine Verbesserung der Bruchdehnung und Schlagbiegefestigkeit sowie eine Erhöhung des E-Moduls erreicht.

Schließlich ist der ökonomische Aspekt von Interesse. Insbesondere durch Einsatz von Ultraschall kann eine kostengünstige Produktion von gefüllten thermoplastischen Polymeren und Polymerwerkstoffen im großen Maßstab erreicht werden.

Als Ausgangsmaterial kann wie oben beschrieben das grobskalige oder nanoskalige Magnesiumhydroxid verwendet werden, was gemäß den oben beschriebenen Verfahren hergestellt wurde, deren Primärpartikel eine Vorbeschichtung mit dem Wachstumsinhibitor A, dem Dispergiermittel B und/oder der wässrigen Stearatlösung C aufweisen. In Abhängigkeit von dem eingesetzten Additiv kann die erhaltene Suspension oder Dispersion direkt der Perlmahlung bzw. Ultraschallbehandlung unterworfen werden oder ein vorheriges Trocknen der Magnesiumhydroxidpartikel wird durchgeführt, wenn das Lösungsmittel gewechselt werden soll. Dieses Trocknen kann zum Beispiel durch Sprühtrocknung geschehen. Wird das so hergestellte pregecoatete Magnesiumhydroxid sprühgetrocknet, entsteht ein locker agglomeriertes nanoskaliges oder grobskaliges Magnesiumhydroxidpulver, das entsprechend mit dem Wachstumsinhibitor A, dem Dispergiermittel B und/oder der wässrigen Stearatlösung C gecoatet ist.

Dieses Pulver kann in einem wässrigen oder organischen Lösungsmittel mittels einer Perlmühle unter Zuhilfenahme von geeigneten sterisch stabilisierenden Dispergiermittel B bzw. Dispergiermittel D desagglomeriert werden. Als Ergebnis werden grob- und/oder nanoskalige Magnesiumhydroxid-Dispersionen in entweder wässrigen oder organischen Lösungsmitteln erhalten (wie z.B. in der noch nicht veröffentlichten DE-Anmeldung Nr. 10 2008 031 361.0 beschrieben, auf die Bezug genommen wird).

Diese Dispersionen können dann erfindungsgemäß in Thermoplaste eingearbeitet werden.

Das Dispergiermittel B weist eine oder mehrere anionische Gruppen in seinem Molekül auf. Es kann z.B. niedermolekular, monomer, oligomer oder als Polymer vorliegen. Das Dispergiermittel B kann auch als Salz dieser Verbindung eingesetzt werden, wobei die mit mehreren anionischen Gruppen enthaltende Hauptkette auch verzweigt oder zyklisch sein kann mit hydrophoben und/oder hydrophilen Teilstrukturen. Diese anionischen Gruppen, z.B. Carboxy-, Phosphonat-, Phosphat-, Sulfonat- oder Sulfatgruppen, bewirken eine anionische Kopplung des Additivmoleküls auf der Füllstoffoberfläche, da diese in Wechselwirkungen mit der Magnesiumhydroxidoberfläche treten können. Die daneben zusätzlich vorhandenen oligomeren oder polymeren Haupt- und gegebenenfalls zusätzlichen Seitenketten erlauben eine weitere elektrostatische und/oder sterische Stabilisierung und verhindern somit eine Reagglomeration. Die Seitenketten können aus halbpolaren und/oder hydrophilen Teilstrukturen bestehen. Zusätzlich verleihen sie den Partikeln eine äußere Polarität, die je nach Dispergiermittel B das Partikel hydrophiler oder hydrophober erscheinen lässt und durch diese Anpassung der Polarität später ein leichteres Einbringen in eine Polymermatrix ermöglicht und eine Agglomeration im Polymer verhindert, so dass die Magnesiumhydroxidpartikel nach der Einarbeitung desagglomeriert und homogen verteilt in der Polymermatrix vorliegen. Auch können diese Dispergiermittel B für wässrige Lösungsmittel weitere reaktive Endgruppen enthalten und somit funktionalisiert sein. Diese funktionalisierten Gruppen umfassen Hydroxygruppen aber auch Doppelbindungen, Amin- und Thiolgruppen. Mit Hilfe dieser funktionellen Gruppen kann eine spätere kovalente Verknüpfung mit den Komponenten des Polymers erfolgen, z.B. OH-Gruppen mit einem Diisocyanat unter Bildung eines Polyurethans.

Das Dispergiermittel B weist eine gute Wasserlöslichkeit auf, da diese erfindungsgemäß entweder in dem Reaktionsgemisch zur Herstellung der Magnesiumhydroxidpartikel vorliegt bzw. der wässrigen Suspension oder Dispersion der Magnesiumhydroxidpartikel in dem wässrigen Lösungsmittel hinzugefügt wird.

Die Menge des Dispergiermittels B kann variieren. Üblicherweise liegt das Dispergiermittel B in einer Konzentration von 0,1 bis 20 Gew.% bezogen auf den Feststoffgehalt an Mg(OH)2 vor.

Bei organischen Lösungsmitteln wird das Dispergiermittel D verwendet. Das Dispergiermittel D kann niedermolekular, monomer, oligomer oder als Polymer vorliegen. Dieses Dispergiermittel D für organische Lösungsmittel weist, wie das Dispergiermittel B, eine oder mehrere anionische Gruppen auf, z.B. Sulfonat-, Sulfat-, Phosphonat-, Phosphat- oder Carboxygruppen. Sie erlauben die entsprechende Wechselwirkung mit der Oberfläche der Magnesiumhydroxidpartikel und ermöglichen es, die entstehenden Partikel elektrostatisch und/oder sterisch zu stabilisieren und somit eine Reagglomeration zu verhindern. Somit richtet sich eine Ausführungsform der vorliegende Erfindung darauf, dass im Schritt b) bereitgestellte Magnesiumhydroxidpartikel in einem organischen Lösungsmittel beschichtet mit einem Dispergiermittel D vorliegen.

Diese stabilisierenden Dispergiermittel D können Haupt- und gegebenenfalls zusätzliche oligomere oder polymere Seitenketten enthalten, die zum einen eine sterische Stabilisierung ermöglichen und zum anderen eine oder mehrere Endgruppen tragen können, die in der Lage sind, mit dem Zielpolymer zu interagieren und gegebenenfalls kovalent mit dem Zielpolymer zu verbinden. Diese reaktiven Endgruppen, auch als Funktionalisierung bezeichnet, sind z.B. Doppelbindungen, Hydroxy-, Amin-, Thiol-, Isocyanat- oder Epoxy-Gruppen.

Das Dispergiermittel D kann entweder niedermolekular, monomer, oligomer oder als Polymer vorliegen. Die Seitenketten können aus hydrophoben und/oder hydrophilen Teilstrukturen bestehen.

Das sterisch stabilisierende Dispergiermittel D wird in Konzentrationen von 0,1 bis 20 Gew.% bezogen auf den Feststoffgehalt an Mg(OH)2 eingesetzt.

Erfindungsgemäß können die eingesetzten nanoskaligen, gecoateten, desagglomerierten Magnesiümhydroxidpartikel funktionalisiert sein.

In einer erfindungsgemäßen Ausführungsform liegen die grob- und/oder nanoskaligen, gecoateten, desagglomerierten und vorzugsweise funktionalisierten Magnesiumhydroxidpartikel in einem wässrigen Lösungsmittel beschichtet mit einem Dispergiermittel B vor, in einer anderen Ausführungsform liegen die Magnesiumhydroxidpartikel in einem organischen Lösungsmittel beschichtet mit einem Dispergiermittel D vor.

Bevorzugt wird in Abhängigkeit des Thermoplasts die Oberflächenbeschichtung der Magnesiumpartikel durchgeführt. Wird z.B. die Magnesiumhydroxid-Suspension oder Dispersion in ein unpolares Polymer, wie z.B. Polyethylen oder Polypropylen eingearbeitet, so handelt es sich bei dem Dispergiermittel B oder D ebenfalls um ein unpolares Dispergiermittel. Alternativ ist die Verwendung von einer wässrigen Stearatlösung C oder einer anderen Fettsäurelösung möglich. Die verschiedenen Dispergiermittel können gegebenenfalls in Kombination mit einem Wachstumsinhibitor A verwendet werden. Da die unpolaren Fettsäuren in wässrigem Lösungsmittel allerdings keine sterisch stabilisierenden Eigenschaften besitzen, werden nach der in-situ-Fällung locker agglomerierte Suspensionen an gecoateten Magnesiumhydroxidpartikeln erhalten - wie z.B. in der noch nicht veröffentlichten DE-Anmeldung Nr. 10 2008 031 361.0 beschrieben. Allerdings können diese lockeren Agglomerate mittels der Scherkräfte von z.B. der Extruderwalze beim Extrusionsverfahren oder während des Knetens leichter desagglomeriert werden, so dass die Primärpartikel nahezu vollständig vereinzelt in den Thermoplasten vorliegen.

Gleiches gilt bei Verwendung von organischen Lösungsmitteln in Verbindung mit dem Dispergiermittel D. Auch hier wird entsprechend der Polarität des Zielpolymers das Dispergiermittel D ausgewählt.

Die Magnesiumhydroxidpartikel können dabei in einer Ausführungsform direkt aus der Fällungsreaktion als Suspension oder Dispersion eingesetzt werden. Alternativ findet eine weitere Behandlung der Magnesiumhydroxidpartikel zur Verbesserung der Teilchengrößenverteilung und zur Verbesserung der Desagglomerierbarkeit eine Behandlung mit Ultraschall oder eine Perlmahlung als Zerkleinerungsprozess statt.

Als Mittel, die ein Beschichten der ausgefällten Magnesiumhydroxid-Primärpartikel in-situ ermöglichen, sind Dispergiermittel B sowie eine wässrige Stearatlösung C möglich. Gegebenenfalls kann des Weiteren der Wachstumsinhibitor A anwesend sein. D.h. in einer Ausführungsform sind die in Schritt b) bereitgestellten Magnesiumhydroxidpartikel in einem wässrigen Lösungsmittel beschichtet mit einem Stearat C. In einer weiteren Ausführungsform können die in Schritt b) bereitgestellten Magnesiumhydroxidpartikel zusätzlich mit einem Wachstumsinhibitor A beschichtet sein.

Dieser Wachstumsinhibitor A ist z.B. einer wie er im Stand der Technik beschrieben ist, z.B. in der DE 103 57 116 A1. Der Wachstumsinhibitor zeichnet sich dadurch aus, dass er mindestens zwei anionische Gruppen aufweist. Bevorzugt enthält der Inhibitor als anionische Gruppen mindestens zwei der folgenden Gruppen: eine Sulfat-, eine Sulfonat-, eine Phosphonat-, eine Carboxy- oder eine Phosphatgruppe, bevorzugt mindestens zwei identische dieser Gruppen. Alternativ können auch zwei verschiedene anionische Gruppen vorliegen (wie in der noch nicht veröffentlichten DE-Anmeldung Nr. 10 2008 031 361.0 beschrieben).

Diese anionischen Gruppen erlauben eine anionische Kopplung des Additivs mit der Oberfläche des Magnesiumhydroxidpartikels.

Die Wachstumsinhibitoren A können in funktionalisierter Form vorliegen, das heißt sie können eine oder mehrere reaktive Endgruppen enthalten, z. B. Hydroxygruppen, diese können später als funktionelle Gruppe mit einem Polymer Wechsel wirken und z. B. kovalente Bindungen ausbilden. Beispielhaft seien hier die kovalenten Bindungen genannt, die zwischen OH-Gruppen und einem im Polymer vorhandenen Diisocyanat unter Bildung eines Polyurethans ausgebildet werden. Solche reaktiven Gruppen können weiterhin Doppelbindungen, Hydroxy-, Amin-, und Thiolgruppen sein.

Die Stearatlösung C ist eine wässrige Stearatlösung z.B. eine Natriumstearatlösung. Das Stearat kann in fester Form zu einer der genannten Lösungen, der Magnesiumsalzlösung oder der Alkalihydroxidlösung, zugefügt werden und somit bei der Fällung anwesend sein. Aufgrund seiner Carboxylgruppen als anionische Gruppen umhüllt das Stearat die sich bei der Fällung bildenden Primärpartikel des Magnesiumhydroxids und beschichtet diese entsprechend. Die dadurch erhaltenen Partikel zeigen lockere Agglomerate und ein verbessertes Desagglomerierungsverhalten auf.

Das Lösungsmittel für die erfindungsgemäß eingesetzten Magnesiumhydroxidpartikel in Form einer Suspension oder Dispersion können übliche wässrige und organische Lösungsmittel sein. Als organische Lösungsmittel können beispielsweise eingesetzt werden: Ethanol, Propanol, Butanol, Aceton, Methylethylketon, Toluol, Ethylacetat und Siedegrenzbenzin. Des weiteren sind als organische Lösungsmittel Weichmacher auf Phthalatbasis denkbar. Wässrige Lösungsmittel können übliche wässrige Lösungsmittel, wie Wasser und Wasser-Alkohol Gemische sein.

Die Lösungsmittel verdampfen vorteilhaft während des in Kontaktbringens und/oder Vermischens der Magnesiumhydroxidpartikel mit dem geschmolzenen Thermoplasten. Gegebenenfalls kann die Mischung aus Thermoplast und Magnesiumhydroxidpartikel weiter erwärmt werden, um ein gegebenenfalls vollständiges Verdampfen des Lösungsmittels zu erlauben.

Bevorzugt wird das Lösungsmittel der Suspension oder Dispersion in mindestens einer Entgasungszone der Vorrichtung zur Durchführung des Verfahrens, wie einem Extruder, abgeführt.

Der Füllgrad an Magnesiumhydroxidpartikeln in Thermoplasten bei Durchführung des erfindungsgemäßen Verfahrens beträgt 0,5 bis 80 Gew.-% Füllstoffgehalt im Polymer, die verwendete Suspension oder Dispersion weist dabei vorzugsweise einen Feststoffgehalt an Magnesiumhydroxidpartikeln von 0,1 bis 70 Gew.-% auf.

Die Thermoplaste sind dabei ausgewählt aus den thermoplastischen Kunststoffen: Polypropylene, Polyethylene, Ethylvinylacetate, Polyvinylchloride, Polyamide, Polyester, Poly(meth)acrylate, Polymethyl(meth)acrylate, Polycarbonate, Acrylnitril-Butadien-Styrole, Polystyrole, Styrol-Butadiene, Acrylnitril-Styrole, Polybutene, Polyethylenterephthalate, Polybutylenterephthalate, modifizierte Polyphenylether, aliphatische Polyketone, Polyarylsulfone, Polyphenylensulfide.

Bevorzugt handelt es sich um unpolare Thermoplaste, wie Polypropylen oder Polyethylen, oder polare Thermoplaste, wie Ethylvinylacetat (EVA) und Polyamide.

Weiterhin wird eine Vorrichtung zum Herstellen von Thermoplasten enthaltend grob-und/oder nanoskalige, gecoatete Magnesiumhydroxidpartikel, wobei die Magnesiumhydroxidpartikel in Form einer Suspension oder Dispersion den Thermoplasten hinzugefügt werden, beschrieben. Die Vorrichtung weist zumindest eine Zufuhrvorrichtung für thermoplastisches Polymer, eine Zufuhrvorrichtung für eine Suspension oder Dispersion enthaltend grob- und/oder nanoskalige, gecoatete, desagglomerierte Magnesiumhydroxidpartikel; eine erste Zone, in die der Thermoplast über die Zufuhrvorrichtung zugeführt wird, eine zweite Zone, in die die Suspension oder Dispersion der Magnesiumhydroxidpartikel über die Zufuhrvorrichtung zugeführt wird, gegebenenfalls eine erste Entgasungszone, gegebenenfalls eine zweite Entgasungszone, einen beheizbaren Bereich zum Aufschmelzen des Thermoplasten und eine Vorrichtung zum Vermischen von aufgeschmolzenen Thermoplasten und Magnesiumhydroxidpartikel auf.

Bei der Vorrichtung handelt es sich in einer Ausbildung um eine Extrusionsvorrichtung, bei der die Vorrichtung zur Vermischung des aufgeschmolzenen Thermoplasten und der Magnesiumhydroxidpartikel bevorzugt eine beheizbare Extruderschnecker (einfach oder doppelt Extruderschnecke) ist. Die Zufuhr der Suspension oder Dispersion von Magnesiumhydroxidpartikeln erfolgt bevorzugt mit Hilfe einer Pumpe über die Zuführvorrichtung.

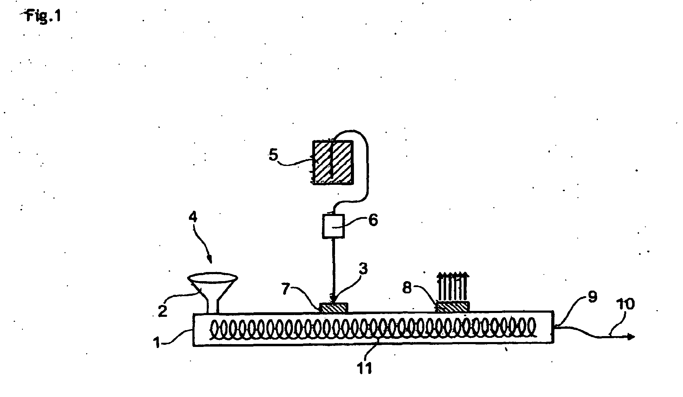

Unter Bezugnahme auf die Figur 1 wird die Vorrichtung näher erläutert.

Die Vorrichtung umfasst eine erste Zone des Extruders 1 (erste Zufuhrvorrichtung) zu dem die Ausgangsmaterialien, der Thermoplast (Granulat) 4 und eine zweite Zone (zweite Zufuhrvorrichtung 3), über die die Suspension oder Dispersion enthaltend grob- und/oder nanoskalige, gecoatete, desagglomerierte und ggf: funktionalisierte Magnesiumhydroxidpartikel, zugeführt werden. Der Thermoplast 4 wird über eine Zuführvorrichtung 2 in eine erste Zone des Extruders 1 zugeführt. Das thermoplastische Polymer (Thermoplast) 4 wird dann z.B. mit Hilfe einer Extruderschnecke 11 in Richtung der Auslaufsöffnung 9, z.B. eine Düse, transportiert. Mit einer zweiten Zufuhrvorrichtung 3 wird die Dispersion enthaltend grob- und/oder nanoskalige, gecoatete, desagglomerierte, ggf. funktionalisierte Magnesiumhydroxidpartikel, dem zu einer zweiten Zone des Extruders zugeführt. Bevorzugt findet dieses mit Hilfe einer Pumpe 6, z.B. einer Spinpumpe, statt. Diese Pumpe 6 fördert die Suspension oder Dispersion enthaltend grob- und/oder nanoskalige, gecoatete desagglomerierte Magnesiumhydroxidpartikel aus einem Vorratsbehälter/Wechselbehälter 5 zu der Zufuhrvorrichtung 3. Die zweite Zone, in die die Suspension oder Dispersion der Magnesiumhydroxidpartikel über die Zufuhrvorrichtung zugeführt wird, ist gegebenenfalls teilweise oder vollständig deckungsgleich mit einer ersten Entgasungszone 7. Insbesondere wenn das thermoplastische Polymer bei Einbringen der Magnesiumpartikel im geschmolzenen Zustand vorliegt, erfolgt bei Zuführen der Magnesiumhydroxid-Suspension oder - Dispersion ein sofortiges Verdampfen des Lösungsmittels in der Entgasungszone 7. Mit Hilfe von geeigneten Einrichtungen können diese gasförmigen Lösungsmittel aus dem System abgeführt werden. Die Extruderschnecke 11 ist bevorzugt beheizbar, um eine Aufschmelzen des Thermoplasten zu ermöglichen. Die Vorrichtung weist gegebenenfalls eine zweite Entgasungszone 8 auf, in der gasförmige Verbindungen abgezogen werden, z.B. Wasserdampf oder andere Inhaltsstoffe, insbesondere Lösungsmittel der Magnesiumhydroxidpartikel. Der beheizbare Bereich der Vorrichtung kann sich über den gesamten Extruder erstrecken oder, alternativ, kann der beheizbare Bereich erst nach dem Zufuhrbereich ("zweite Zone") für die Suspension oder Dispersion enthaltend grob- und/oder nanoskalige, gecoatete, desagglomerierte Magnesiumhydroxidpartikel liegen. In diesem Fall erfordert diese ein Vorhandensein einer zweiten Entgasungszone 8, um verdampfende Lösungsmittel zu entfernen. Die weiterhin vorhandene Vorrichtung zum Vermischen von aufgeschmolzenem Thermoplast und Magnesiumhydroxidpartikel ist bevorzugt die Extruderschnecke 11, die als Einzel- oder Doppelschnecke vorliegen kann. Alternativ könnte das homogene Vermischen auch mit anderen üblichen Mitteln, wie mit einem Kneter, erfolgen. Mit Hilfe der Schnecke werden einerseits die Magnesiumhydroxidpartikel homogen in dem aufgeschmolzenen Thermoplasten verteilt. Andererseits führt die Schnecke diese homogene Mischung aus Thermoplast und Magnesiumhydroxidpartikel in Richtung der Auslassöffnung 9. Dieses führt zu einem Komprimieren des homogenen Gemisches aus Polymer und Magnesiumhydroxidpartikel in einer Kompressionszone, um schließlich in der Auslasszone durch die Auslassöffnung 9, üblicherweise eine Düse, extrudiert zu werden und den mit Magnesiumhydroxidpartikeln gefüllten Thermoplaststrang 10 zu erhalten.
Die Zufuhrvorrichtung 3 wurde so gewählt, dass die kalte Dispersion/Suspension in das bereits aufgeschmolzene heiße Trägermaterial eingebracht wird. Die Zufuhr der Dispersion/Suspension wurde mittels eines speziell entwickelten Isolators realisiert, der die kalte Dispersion/Suspension direkt auf die Doppelschnecke auflegt. Die Geometrie der Doppelschnecke wurde so gewählt, dass an/nahe der Stelle der Zufuhrvorrichtung 3 die Entspannungszone der Schnecke liegt.
Die Position der Zufuhrvorrichtungen 2, 3 (Dosierzonen) muß dem Durchsatzvolumen und dem UD-Verhältnis des Doppelschneckenextruders angepasst werden.
Das UD-Verhältnis (Länge/Durchmesser) beträgt zwischen 1/25 und 1/38. Verwendet wurde ein UD-Verhältnis von 1/32.

Die Vorrichtung umfasst:
1) eine gekühlte Einzugszone 2 mit Aufgabe des Granulats oder Pulvers 4
2) eine Zone zum Anschmelzen und Anhomogenisieren des Thermoplasten
3) Zuführung der Suspension/Dispersion 3 mit Hilfe einer Spinpumpe 6 die unter gleichmäßigem Druck diese Suspension/Dispersion über einen Teflon-Isolator in die Extruderschnecke 11 schonend einbringt
4) Entspannungszone, in der das Gemisch vollständig homogenisiert und vollständig aufgeschmolzen wird
5) Abführung des Lösungsmittel in einer ersten Entgasungszone 7, ggf. gefolgt von weiteren Entgasungszonen 8, z.B. bei einem höheren Lösungsmittelgehalt der Suspension/Dispersion
Der Teflon-Isolator ist z.B. nach ¼ der Länge des Extruders angesetzt.

Dieser Thermoplast kann dann gemäß üblichen Verfahren weiter bearbeitet werden. Zum Beispiel kann der erhaltene gefüllte Polymerstrang 10 mit Hilfe einer entsprechenden Vorrichtung granuliert werden, um so einen Masterbatch bereitzustellen, der dann für die Weiterverarbeitung eingesetzt wird. Diese Weiterverarbeitung kann z.B. ein Spritzguss-Verfahren sein, um die gewünschten Produkte herzustellen.

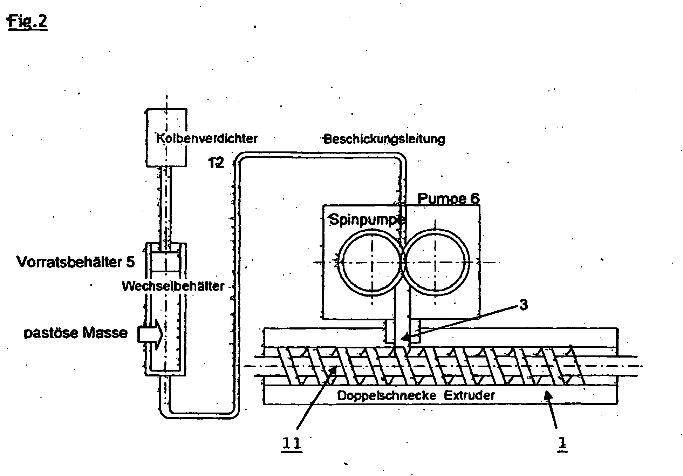

In bevorzugten Ausführungsformen erfolgt die Zuführung der Dispersion mit Hilfe einer Spinpumpe mit Wechselbehälter (Figur 2). In diesem Wechselbehälter presst ein Kolbenverdichter 12 die Suspension oder Dispersion aus dem Vorratsbehälter/Wechselbehälter 5 in Richtung Spinpumpe 6. Dieses ist besonders geeignet für Suspensionen oder Dispersionen mit einem hohen Feststoffgehalt, z.B. für Suspensionen oder Dispersionen mit einem Feststoffgehalt von bis zu 60 Gew.-%. Diese Pumpe erlaubt eine gleichmäßige Förderleistung.

Schließlich richtet sich die vorliegende Anmeldung auf Thermoplasten enthaltend grob- und/oder nanoskalige, gecoatete, desagglomerierte und ggf. funktionalisierten Magnesiumhydroxidpartikel in Form der gecoateten Primärpartikel erhältlich nach dem erfindungsgemäßen Verfahren. Erfindungsgemäß ist der Füllgrad an Magnesiumhydroxidpartikeln in gefülltem Thermoplast 60 bis 80 Gew.-% Füllstoffgehalt im Polymer. Die verwendeten Magnesiumhydroxidpartikel sind bevorzugt erhältlich nach dem in-Situ-Verfahren, wie beschrieben in der noch nicht veröffentlichen DE-Anmeldung Nr. 10 2008 031 361.0.

Diese Thermoplasten zeichnen sich durch verbesserte mechanische Eigenschaften, insbesondere verbessertem Elastizitätsmodul (E-Modul) aus. Des Weiteren konnte die Versprödungsneigung verringert werden.

Im Folgenden wird die Erfindung unter Bezugnahme auf ein Beispiel weiter erläutert, ohne auf dieses eingeschränkt zu sein.

### Beispiele

Eine Extrudervorrichtung ausgestattet mit einer Spinpumpe mit Kolbenförderung für die Zufuhr der Suspension oder Dispersion an Magnesiumhydroxidpartikel wurde eingesetzt. Ein Thermoplast, Escorene UL 00119 (Ethylenvinylacetat, EVA, Exxon) wurde, über die erste Zufuhrvorrichtung zugeführt, in den Extruder gegeben. Der Extruder ist mit einer beheizbaren Extruderschnecke ausgestattet. Die Extruderschnecke schmilzt den in Form von Pulver oder Granulat zugeführten Thermoplasten auf. Zu dem aufgeschmolzenen Thermoplasten wird über eine Spinpumpe mit Kolbenförderung über eine zweite Zufuhreinrichtung in die zweite Zone, in die die Suspension oder Dispersion der Magnesiumhydroxidpartikel über die Zufuhrvorrichtung dem Extruder zugeführt wird, diese Suspension oder Dispersion dem aufgeschmolzenen thermoplastischen Polymer beigemischt. Vorliegend wurde in einem ersten Experiment EVA gefüllt mit 50 Gew.-% grob (d₅₀ ca. 10.000 nm) bzw. 50 Gew.-% nanoskaligen (d₅₀ 98 nm) Mg(OH)₂, eingesetzt.

Das Ethylvinylacetat-Granulat für die Herstellung der Prüfkörper mit einem Anteil von 50 und 60 Gew.-% nanoskaligen, gecoateten, desagglomerierten Magnesiumhydroxid erfolgte durch Mischung des reinen EVA-Granulats mit nanoskaligem Magnesiumhydroxid gefüllten EVA-Granulats (Masterbatch). Dieser Masterbatch wurde dann über die Zufuhreinrichtung dem Extruder zugeführt.

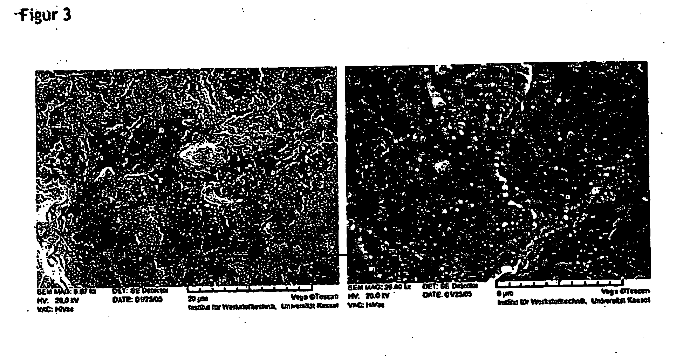

In der Figur 3 sind rasterelektronenmikroskopische Aufnahmen der erhaltenen Granulatchargen dargestellt. Der Unterschied hinsichtlich der Partikelverteilung wird deutlich. Es zeigen sich viele Magnesiumhydroxidnanopartikel im Größenbereich um 100 nm, und es sind nur einige wenige Agglomerate erkennbar. Die Nanopartikel sind dabei homogen in der Polymermatrix verteilt und gut an diese angebunden.

Die erhaltenen gefüllten Thermoplaststränge wurden gemäß bekannten Verfahren granuliert. Aus diesen Granulatchargen wurden anschließend durch bekannte Spritzguss-Verfahren Probenkörper hergestellt. Dazu wurde das Polymer bei 210 °C geschmolzen und mit einer Geschwindigkeit von 210 mm/min in ein auf 60 °C erwärmte Gussform eingespritzt. Gegenüber dem reinen EVA waren bei der Herstellung von Prüfstäben bestehend aus 50 Gew.-% EVA und 50 Gew.-% grobskaligem Magnesiumhydroxidpartikel höhere Drücke zum Einspritzen erforderlich. Bei dem nanoskaligen Material war das Einziehen des Materials gegenüber dem grobskaligen Material einfacher. Allerdings waren hier noch höhere Drücke notwendig.

Für die Herstellung der Probenkörper bestehend aus 40 Gew.-% EVA gefüllt mit 60 Gew.-% nanoskaligen, gecoateten, desagglomerierten Magnesiumhydroxid wurde die Temperatur der Einzugszone auf 50 °C gesenkt. Bei der Herstellung dieser Probenkörper war ein deutlich schnelleres Abkühlen zu beobachten. Insgesamt konnte festgestellt werden, dass die mit nanoskaligen, gecoateten, desagglomerierten Magnesiumhydroxidpartikel gefüllten EVA-Prüfstäbe im Vergleich zu Prüfstäben, die mit grobskaligem Magnesiumhydroxid hergestellt wurden, in Folge besserer Fließfähigkeit wesentlich einfacher herstellbar waren. Auch konnte ein signifikant schnelleres Abkühlen der Probenkörper mit nanoskaligem, gecoatetem, desagglomeriertem Magnesiumhydroxid im Vergleich zu Probenkörper mit grobskaligem Magnesiumhydroxid bzw. ungefüllten Probenkörpern beobachtet werden.

### Mechanische Charakterisierung

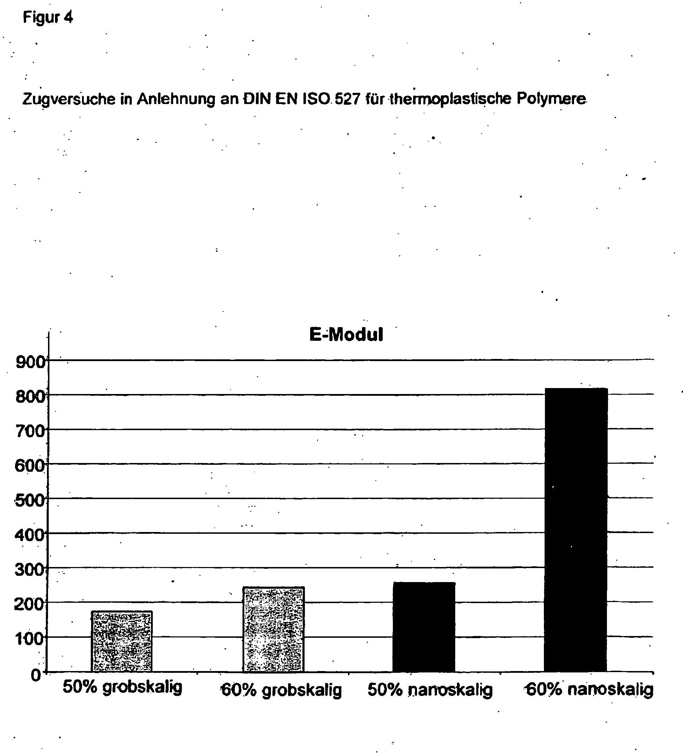

Für die mechanische Charakterisierung der Probenkörper wurden Reiß-Dehnungsmessungen (Figur 4) durchgeführt. Bei diesen Versuchen wird die Teilchengrößenabhängigkeit der Bruchmechanik untersucht, da Nanopartikel ein im Vergleich zu groben Füllstoffen erfahrungsgemäß unterschiedliche Bruchmechaniken in Polymeren aufweisen.

Die Zugversuche wurden in Anlehnung an DIN EN ISO 527 durchgeführt. Vor der Versuchsdurchführung wurden die Prüfkörper 16 Stunden im Normklima gelagert. Abmessung der Prüfkörper: Norm-Schulterstäbe 2 (DIN EN ISO 527-3 Typ 1 bis 3); Prüfgeschwindigkeit: 50 mm/min.

Besonders auffällig waren bei den durchgeführten Zugversuchen die Ergebnisse des Elastizitätsmoduls. Bei diesem zeigte sich, dass ab einem Füllstoffgehalt von 60 Gew.-% nanoskaligen, gecoateten, desagglomerierten Magnesiumhydroxid eine reproduzierbare Vervierfachung des E-Moduls - im Vergleich zum grobskaligen Magnesiumhydroxid mit ebenfalls 60 Gew.-% Füllstoffgehalt - eintritt. Diese signifikante Erhöhung des E-Moduls von 243 N/mm² auf 816 N/mm² scheint auf die stark gesteigerte Füllstoffoberfläche zurückgeführt werden zu können, die nach intensiver Betrachtung der rasterelektronenmikroskopischen Aufnahme eine gute Wechsel-wirkung zur Polymermatrix aufweist. Durch den gesteigerten Oberflächenkontakt des nanoskaligen Füllstoffes zum Polymer tritt eine starke armierende Wirkung bedingt durch den Füllstoff auf. Bei einem Füllstofffgehalt von 50% war eine geringere Erhöhung des E-Moduls von 172 N/mm² auf 256 N/mm² zu verzeichnen.

Die Figur 4 zeigt die erhaltenen Ergebnisse bei der Bestimmung des E-Moduls in Anlehnung an DIN EN ISO 527 für thermoplastische Polymere mit 50 bzw. 60%-tigem Füllstoffgehalt an grob- bzw. nanoskaligen Magnesiumhydroxidpartikeln.

### Liste der Bezugsziffern:

1 Extruder
2 erste Zufuhrvorrichtung
3 zweite Zufuhrvorrichtung
4 Pulver oder Granulat des Thermoplasten
5 Vorratsbehälter/Wechselbehälter
6 Spinpumpe
7 erste Entgasungszone
8 zweite Entgasungszone
9 Auslauföffnung
10 gefüllter Thermoplaststrang
11 Extruderschnecke
12 Kolbenverdichter

## Patentansprüche

1. Verfahren zur Herstellung von gefüllten Thermoplasten enthaltend nanoskalige, gecoatete und desagglomerierte Magnesiumhydroxidpartikel in Form der gecoateten Primärpartikel, umfassend die Schritte
a) Bereitstellen eines Thermoplasten;
b) Bereitstellen von nanoskaligen, gecoateten, desagglomerierten Magnesiumhydroxidpartikeln als Suspension oder Dispersion in einem wässrigen oder organischen Lösungsmittel;
c) Zuführen der nanoskaligen, gecoateten, desagglomerierten Magnesiumhydroxidpartikel in Suspensionen oder Dispersion zu dem Thermoplasten;
d) Vermischen der Magnesiumhydroxidpartikel mit dem erwärmten, aufgeschmolzenen Thermoplast;
e) gegebenenfalls Entfernen des Lösungsmittels der Suspension oder Dispersion aus dem Gemisch von Schritt d).

2. Verfahren zur Herstellung von gefüllten Thermoplasten nach Anspruch 1, weiterhin umfassend den Schritt
f) Extrudieren des Thermoplasten enthaltend nanoskalige, gecoatete, desagglomerierte Magnesiumhydroxidpartikel.

3. Verfahren nach einem der vorherigen Ansprüche, wobei die im Schritt b) bereitgestellten nanoskaligen, gecoateten, desagglomerierten Magnesiumhydroxidpartikel in einem organischen Lösungsmittel beschichtet mit einem Dispergiermittel D vorliegen.

4. Verfahren nach einem der Ansprüche 1 oder 2, wobei die im Schritt b) bereitgestellten nanoskaligen, gecoateten, desagglomerierten Magnesiumhydroxidpartikel in einem wässrigen Lösungsmittel beschichtet mit einem Dispergiermittel B vorliegen.

5. Verfahren nach zumindest einem der vorherigen Ansprüche 1 bis 4, wobei die nanoskaligen, gecoateten, desagglomerierten Magnesiumhydroxidpartikel erhalten werden durch Behandlung von pregecoateten Magnesiumhydroxidpartikeln mit Ultraschall in Anwesenheit von einem Dispergiermittel B in einem wässrigen Lösungsmittel bzw. Dispergiermittel D in einem organischen Lösungsmittel.

6. Verfahren nach einem der Ansprüche 1 bis 5, wobei die nanoskaligen, gecoateten, desagglomerierten Magnesiumhydroxidpartikel erhalten werden durch Perlmahlung der Suspension oder Dispersion an ungecoateten oder pregecoateten Magnesiumhydroxidpartikeln in einem wässrigen Lösungsmittel in Anwesenheit von einem Dispergiermittel B oder in einem organischen Lösungsmittel in Anwesenheit von einem Dispergiermittel D.

7. Verfahren nach Anspruch 1 oder 2, wobei die im Schritt b) bereitgestellten nanoskaligen, gecoateten Magnesiumhydroxidpartikel in einem wässrigen Lösungsmittel beschichtet mit einem Stearat C vorliegen.

8. Verfahren nach einem der Ansprüche 1 bis 7, wobei die im Schritt b) bereitgestellten nanoskaligen, gecoateten, desagglomerierten Magnesiumhydroxidpartikel zusätzlich beschichtet sind mit einem Wachstumsinhibitor A.

9. Verfahren nach zumindest einem der vorherigen Ansprüche, wobei der Füllgrad an Magnesiumhydroxidpartikeln im gefüllten Thermoplast 0,5 bis 80 Gew.-% Füllstoffgehalt im Polymer beträgt.

10. Verfahren nach zumindest einem der vorherigen Ansprüche, wobei die Suspension oder Dispersion, die dem Thermoplast im Schritt c) zugeführt wird, 0,1 bis 70 Gew.-% Feststoffgehalt an Magnesiumhydroxidpartikel aufweist.

11. Verfahren nach zumindest einem der vorherigen Ansprüche, wobei die Thermoplasten ausgewählt sind aus den thermoplastischen Kunststoffen, Polypropylene, Polyethylene, Ethylvinylacetate, Polyvinylchloride, Polyamide, Polyester, Poly(meth)acrylate, Polymethyl(meth)acrylate, Polycarbonate, Acrylnitril-Butadien-Styrole, Polystyrole, Styrol-Butadiene, Acrylnitril-Styrole, Polybutene, Polyethylenterephthalate, Polybutylenterephthalate, modifizierte Polyphenylether, aliphatische Polyketone, Polyarylsulfone, Polyphenylensulfide.

12. Verfahren nach zumindest einem der Ansprüche 1 bis 6, 8 bis 10, wobei die eingesetzte nanoskaligen, gecoateten, desagglomerierten Magnesiumhydroxidpartikel funktionalisiert sind.

13. Gefüllter Thermoplast enthaltend nanoskalige, gecoatete, desagglomerierte Magnesiumhydroxidpartikel in Form der gecoateten Primärpartikel erhältlich nach zumindest einem der Ansprüche 1 bis 12, wobei der Füllgrad an Magnesiumhydroxidpartikeln in gefülltem Thermoplast 60 bis 80 Gew.-% Füllstoffgehalt im Polymer beträgt.

## Claims

1. Process for the production of filled thermoplastics comprising nanoscale, coated and disagglomerated magnesium hydroxide particles in the form of the coated primary particles, comprising the following steps:
a) provision of a thermoplastic;
b) provision of nanoscale, coated, disagglomerated magnesium hydroxide particles as suspension or dispersion in an aqueous or organic solvent;
c) introduction of the nanoscale, coated, disagglomerated magnesium hydroxide particles in suspensions or dispersion to the thermoplastic;
d) mixing of the magnesium hydroxide particles with the heated, molten thermoplastic;
e) optionally removal of the solvent of the suspension or dispersion from the mixture from step d).

2. Process for the production of filled thermoplastics according to Claim 1, also comprising the following step:
f) extrusion of the thermoplastic comprising nanoscale, coated, disagglomerated magnesium hydroxide particles.

3. Process according to any of the preceding claims, where the nanoscale, coated, disagglomerated magnesium hydroxide particles provided in step b) are present in an organic solvent in a form coated with a dispersing agent D.

4. Process according to Claim 1 or 2, where the nanoscale, coated, disagglomerated magnesium hydroxide particles provided in step b) are present in an aqueous solvent in a form coated with a dispersing agent B.

5. Process according to at least one of the preceding Claims 1 to 4, where the nanoscale, coated, disagglomerated magnesium hydroxide particles are obtained via treatment of precoated magnesium hydroxide particles with ultrasound in the presence of a dispersing agent B in an aqueous solvent and, respectively, dispersing agent D in an organic solvent.

6. Process according to any of Claims 1 to 5, where the nanoscale, coated, disagglomerated magnesium hydroxide particles are obtained via bead milling of the suspension or dispersion of uncoated or precoated magnesium hydroxide particles in an aqueous solvent in the presence of a dispersing agent B or in an organic solvent in the presence of a dispersing agent D.

7. Process according to Claim 1 or 2, where the nanoscale, coated magnesium hydroxide particles provided in step b) are present in an aqueous solvent in a form coated with a stearate C.

8. Process according to any of Claims 1 to 7, where the nanoscale, coated, disagglomerated magnesium hydroxide particles provided in step b) have also been coated with a growth inhibitor A.

9. Process according to at least one of the preceding claims, where the fill level of magnesium hydroxide particles in the filled thermoplastic is from 0.5 to 80% by weight of filler content in the polymer.

10. Process according to at least one of the preceding claims, where the suspension or dispersion which is introduced to the thermoplastic in the step c) has from 0.1 to 70% by weight solids content of magnesium hydroxide particles.

11. Process according to at least one of the preceding claims, where the thermoplastics are selected from the following thermoplastics: polypropylenes, polyethylenes, ethyl-vinyl acetates, polyvinyl chlorides, polyamides, polyesters, poly(meth)acrylates, polymethyl(meth)acrylates, polycarbonates, acrylonitrile-butadiene-styrenes, polystyrenes, styrene-butadienes, acrylonitrilestyrenes, polybutenes, polyethylene terephthalates, polybutylene terephthalates, modified polyphenyl ethers, aliphatic polyketones, polyaryl sulphones, polyphenylene sulphides.

12. Process according to at least one of Claims 1 to 6 and 8 to 10, where the nanoscale, coated, disagglomerated magnesium hydroxide particles used have been functionalized.

13. Filled thermoplastic comprising nanoscale, coated, disagglomerated magnesium hydroxide particles in the form of the coated primary particles obtainable according to at least one of Claims 1 to 12, where the fill level of magnesium hydroxide particles in filled thermoplastic is from 60 to 80% by weight of filler content in the polymer.

## Revendications

1. Procédé pour la préparation de thermoplastiques chargés contenant des particules d'hydroxyde de magnésium nanométriques, revêtues et désagglomérées sous forme des particules primaires revêtues, comprenant les étapes
a) mise à disposition d'un thermoplastique ;
b) mise à disposition de particules d'hydroxyde de magnésium nanométriques, revêtues, désagglomérées sous forme de suspension ou de dispersion dans un solvant aqueux ou organique ;
c) introduction des particules d'hydroxyde de magnésium nanométriques, revêtues, désagglomérées en suspension ou en dispersion dans le thermoplastique ;
d) mélange des particules d'hydroxyde de magnésium avec le thermoplastique chauffé, fondu ;
e) le cas échéant élimination du solvant, de la suspension ou de la dispersion, du mélange de l'étape d).

2. Procédé pour la préparation de thermoplastiques chargés selon la revendication 1, comprenant en outre l'étape
f) extrusion du thermoplastique contenant des particules d'hydroxyde de magnésium nanométriques, revêtues, désagglomérées.

3. Procédé selon l'une quelconque des revendications précédentes, les particules d'hydroxyde de magnésium nanométriques, revêtues, désagglomérées mises à disposition dans l'étape b) se trouvant dans un solvant organique, revêtues par un dispersant D.

4. Procédé selon l'une quelconque des revendications 1 ou 2, les particules d'hydroxyde de magnésium nanométriques, revêtues, désagglomérées mises à disposition dans l'étape b) se trouvant dans un solvant aqueux, revêtues par un dispersant B.

5. Procédé selon au moins l'une quelconque des revendications précédentes 1 à 4, les particules d'hydroxyde de magnésium nanométriques, revêtues, désagglomérées étant obtenues par traitement de particules d'hydroxyde de magnésium prérevêtues par des ultrasons en présence d'un dispersant B dans un solvant aqueux ou d'un dispersant D dans un solvant organique.

6. Procédé selon l'une quelconque des revendications 1 à 5, les particules d'hydroxyde de magnésium nanométriques, revêtues, désagglomérées étant obtenues par broyage par des billes de la suspension ou de la dispersion de particules d'hydroxyde de magnésium non revêtues ou prérevêtues dans un solvant aqueux en présence d'un dispersant B ou dans un solvant organique en présence d'un dispersant D.

7. Procédé selon la revendication 1 ou 2, les particules d'hydroxyde de magnésium nanométriques, revêtues, mises à disposition dans l'étape b) se trouvant dans un solvant aqueux, revêtues par du stéarate C.

8. Procédé selon l'une quelconque des revendications 1 à 7, les particules d'hydroxyde de magnésium nanométriques, revêtues, désagglomérées mises à disposition dans l'étape b) étant en outre revêtues par un inhibiteur de croissance A.

9. Procédé selon au moins l'une quelconque des revendications précédentes, le degré de remplissage de particules d'hydroxyde de magnésium dans le thermoplastique chargé étant de 0,5 à 80% en poids de teneur en solides dans le polymère.

10. Procédé selon au moins l'une quelconque des revendications précédentes, la suspension ou la dispersion qui est introduite dans le thermoplastique dans l'étape c) présentant une teneur en solides de 0,1 à 70% en poids de particules d'hydroxyde de magnésium.

11. Procédé selon au moins l'une quelconque des revendications précédentes, les thermoplastiques étant choisis parmi les matériaux synthétiques thermoplastiques, les polypropylènes, les polyéthylènes, les acétates d'éthylvinyle, les poly(chlorures de vinyle), les polyamides, les polyesters, les poly(méth)acrylates, les poly((méth)acrylates de méthyle), les polycarbonates, les acrylonitrile-butadiènestyrènes, les polystyrènes, les styrènebutadiènes, les acrylonitrile-styrènes, les polybutènes, les poly(téréphtalates d'éthylène), les poly(téréphtalates de butylène), les polyphényléthers modifiés, les polycétones aliphatiques, les polyarylsulfones, les poly(sulfures de phénylène).

12. Procédé selon au moins l'une quelconque des revendications 1 à 6, 8 à 10, les particules d'hydroxyde de magnésium nanométriques, revêtues, désagglomérées utilisées étant fonctionnalisées.

13. Thermoplastique chargé contenant des particules d'hydroxyde de magnésium nanométriques, revêtues, désagglomérées sous forme de particules primaires revêtues pouvant être obtenues selon au moins l'une quelconque des revendications 1 à 12, le degré de remplissage de particules d'hydroxyde de magnésium dans le thermoplastique chargé étant de 60 à 80% en poids de teneur en solides dans le polymère:
